# EUROPÄISCHE PATENTANMELDUNG

(11) **EP 0 974 784 A1**
(43) Veröffentlichungstag der Anmeldung: **26.01.2000**
(21) Anmeldenummer: 99114003.9
(22) Anmeldetag: 19.07.1999
(51) Int. Cl.: F16L 59/14

(54) **Wärmegedämmte Transport- oder Kreislaufleitung für fluide Medien**

(30) Priorität: 21.07.1998 CH 154598
(71) Anmelder: SPF Solartechnik Prüfung Forschung Ingenieurschule Rapperswil ITR, 8640 Rapperswil (CH)
(72) Erfinder: Frei, Ulrich, 8716 Schmerikon (CH); Bürgenmeier, Thomas, 4436 Oberdorf (CH)
(74) Vertreter: Troesch Scheidegger Werner AG

(57) **Zusammenfassung**

Flexible Transport- oder Kreislaufleitungen (7, 9, 11, 13) für flüssige oder gasförmige Medien können in sogenannten Mehrfachleitungen (1), beispielsweise in wärmedämmendem Material, eingebettet sein. Insbesondere, falls die flüssigen oder gasförmigen Medien unterschiedliche Temperaturen aufweisen, ist es vorteilhaft, die Leitungen asymmetrisch in bezug auf den Querschnitt der Mehrfachleitung (1) anzuordnen und/oder die Dämmstärken des wärmedämmenden Materials der Leitungen unterschiedlich zu wählen.

## Beschreibung

Die vorliegende Erfindung betrifft eine Mehrfachleitung, aufweisend mindestens zwei Transport- oder Kreislaufleitungen für fluide Medien, welche in wärmedämmendem Material eingebettet sind, ein Verfahren zu deren Herstellung sowie Verwendung der Mehrfachleitung bei der Speisung und Abführung von fluiden Wärmeträgern bei Sonnenkollektoren.

Gegenstand der Erfindung sind vorzugsweise flexible Transport- oder Kreislaufleitungen für flüssige oder gasförmige Medien, welche in der Regel eine unterschiedliche Temperatur aufweisen. Je nach dem, welche Temperatur das zu transportierende fluide Medium aufweist, sind in der Regel die Transportleitungen unterschiedlich stark wärmegedämmt. Derartige Leitungen werden vorzugsweise eingesetzt für kälte- oder wärmetechnische Apparate, wie Solaranlagen oder Lebensmittelanlagen, wobei zusätzlich in der Aussenhaut beispielsweise Elektrokabel integriert sind für die Überwachung von Regelung oder Steuerung. Die Anforderungen an die unterschiedlich stark ausgebildete Wärmedämmung richtet sich in der Regel nach der Temperaturdifferenz des transportierten fluiden Mediums zur Umgebung.

In der Praxis werden zur Vereinfachung der Installation mehrere Leitungen für den Transport von fluiden Medien, sogenannte Mehrfachleitungen, angeboten, in welchen Leitungsbündel für die verschiedenen wärmetransportierenden, fluiden Medien angeordnet sind und in welchen diese Leitungen aussen herum mittels wärmedämmendem Material isoliert sind.

Die Aufgabe der vorliegenden Erfindung besteht nun darin, derartige Mehrfachleitungen vorzuschlagen, welche eine ausgezeichnete Wärmedämmung ermöglichen, auch beim Anordnen mehrerer Leitungen für fluide Medien mit unterschiedlichen Temperaturen der darin transportierten Medien.

Erfindungsgemäss wird die gestellte Aufgabe mittels einer Mehrfachleitung, insbesondere gemäss dem Wortlaut nach Anspruch 1, gelöst.

Vorgeschlagen wird, dass bei Mehrfachleitungen, aufweisend mindestens zwei Transport- oder Kreislaufleitungen für fluide Medien, welche im wärmedämmenden Material eingedämmt sind, die Leitungen in bezug auf den Querschnitt der Mehrfachleitung asymmetrisch angeordnet sind und/oder dass die Dämmstärken des wärmedämmenden Materials der mindestens zwei Leitungen unterschiedlich sind.

Gemäss einer bevorzugten Ausführungsvariante sind die Leitungen in ein und demselben Material integriert und für die Berücksichtigung der unterschiedlichen Temperaturdifferenzen zwischen den fluiden Medien zwischen den einzelnen Leitungen und der Umgebungstemperatur entsprechend asymmetrisch in der Mehrfachleitung bzw. im Dämmaterial angeordnet. Als wärmedämmende Materialien kommen an sich alle gut isolierenden, insbesondere geschäumten oder eine relativ kleine Dichte aufweisenden Materialien in Frage, wobei sich speziell geschlossenzellige, nicht polare Elastomere als geeignet erwiesen haben. Als Beispiele hierzu seien EPDM, Silikone oder verwandte Materialien zu nennen. Selbstverständlich sind auch andere Materialien, wie geschäumtes Polyurethan, geschäumte Kautschuke usw., als Dämmaterialien geeignet.

Die Aussenform der Mehrfachtransportleitung kann rund, oval oder eine andere beliebige Form aufweisen. Dabei ist die Aussenhaut vorzugsweise widerstandsfähig verstärkt mit ein- oder angearbeiteten Befestigungsösen, oder sie weist einen geflochtenen Schutzmantel auf. Als Rohrmantel denkbar ist beispielsweise auch ein gewelltes Edelstahlrohr.

Selbstverständlich ist es auch möglich, mehr als zwei Leitungen für flüssige oder gasförmige Medien in der Mehrfachleitung anzuordnen, wobei vorzugsweise sowohl die Mehrfachleitung wie auch die darin angeordneten individuellen Transport- oder Kreislaufleitungen flexibel ausgebildet sind. Je nach Einsatz müssen die flexiblen Materialien folgenden Belastungen standhalten:
- Druck oder Vakuum,
- unterschiedlichen Betriebstemperaturen.

Die Leitungen können durch unterschiedliche Techniken in die Wärmedämmung der Mehrfachleitung eingeführt werden, wie beispielsweise:
- durch Einziehen,
- durch Einblasen,
- durch Aufschneiden der Wärmedämmung und Einlegen der Leitungen mit nachfolgendem Verschliessen durch beispielsweise Kleben.

Synthetische Kautschukrohre oder andere, vorzugsweise thermoplastisch verarbeitbare Polymerrohre können direkt mit der Wärmedämmung koextrudiert werden.

In der Wärmedämmung sind Elektrokabel für Überwachung, Regulierung oder Steuerung vorzugsweise integriert. Diese können wiederum direkt bei oder nach der Extrudierung eingearbeitet werden. Die Anzahl der Leiter ist typischerweise zwei bis sechs, grundsätzlich aber nicht beschränkt. Das elektrische Kabel kann mit oder, je nach Anordnung, ohne zusätzliche elektrische Isolation eingesetzt werden. Anstelle oder zusätzlich zu Elektrokabeln kann auch ein Heizband integriert werden. Elektrokabel oder Heizbänder werden mit einem Kleber mit der Wärmedämmung verbunden. Der allfällige Schnitt wird durch ein geeignetes Verfahren, wie beispielsweise durch Kleben, verschlossen.

Die Verbindung der einzelnen Teile durch Kleben oder Koextrusion ergibt eine kompakte Konstruktion. Die Zugfestigkeit richtet sich nach dem stärksten Element des gesamten Verbunds, üblicherweise der flüssigkeitsführenden Leitungen oder dem Hüllmaterial. Zugleich werden die Zugkräfte bei horizontaler wie vertikaler Montage der Leitung durch die Befestigungsösen an Befestigungspunkte übertragen, ohne einzelne Teile der Leitung in undefinierter Weise zu beanspruchen.

Die Anordnung der einzelnen Leitungen innerhalb der Wärmedämmung der Mehrfachleitung erfolgt je nach Zielsetzung an die Wärmeverluste. Beinhaltet die gesamte Leitung einzelne Leitungen mit grosser Temperaturdifferenz der Mediumstemperatur (tₘ₁ - tₘₓ) zur Umgebungstemperatur (tᵤ), kann eine höhere Dämmstärke zugeordnet werden. Um den Wärmeaustausch zwischen den einzelnen Leitungen festzulegen, kann die Dämmstärke ebenfalls den Erfordernissen angepasst werden.

Die Erfindung wird nun anschliessend beispielsweise und unter Bezug auf die beigefügten Figuren näher erläutert.

Dabei zeigt:
- Fig. 1: im Querschnitt, eine mögliche Mehrfachleitung gemäss der vorliegenden Erfindung, umfassend mehrere Transportleitungen für fluide Medien mit unterschiedlicher Temperatur, und
- Fig. 2: im Querschnitt, eine erfindungsgemässe Verbindungsleitung in der thermischen Solartechnik.

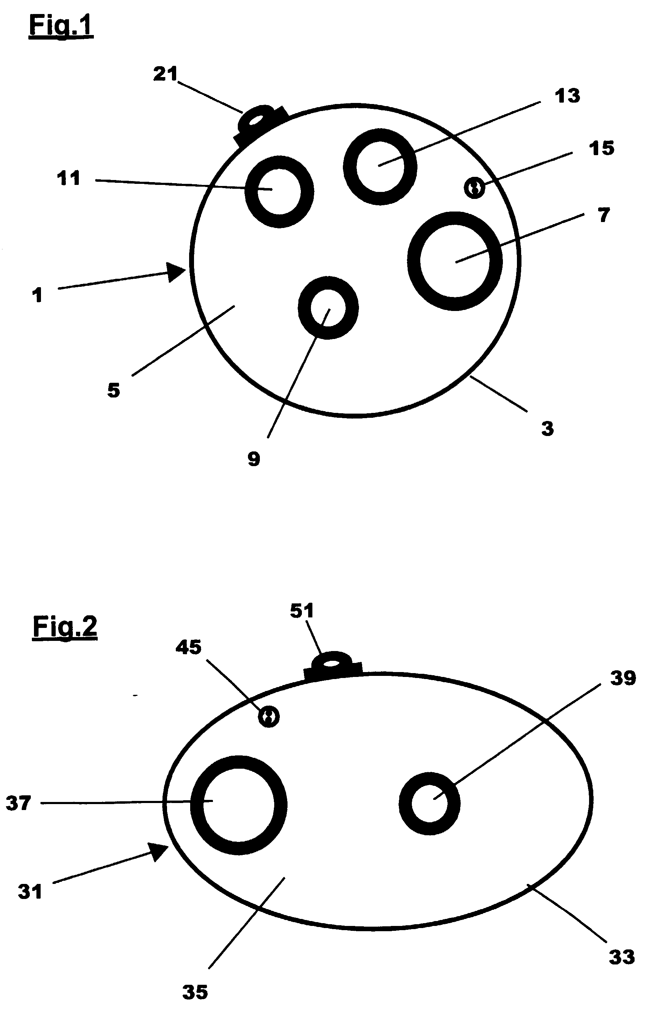

Fig. 1 zeigt eine Mehrfachtransportleitung 1, aufweisend eine äussere verstärkte Hülle 3, beispielsweise aufweisend einen geflochtenen Schutzmantel. Im Innern der Mehrfachleitung ist ein Dämmaterial 5 angeordnet, wie beispielsweise bestehend aus EPDM (Terpolymer aus Ethylen, Propylen und Dienen, wie Di-cyclopentadien, Hexadien usw.). Selbstverständlich ist es möglich, auch ein anderes geeignetes Wärmedämmaterial zu verwenden, wie beispielsweise geschäumtes Polyurethan, Polystyrol und dergleichen.

Im Innern des Dämmaterials sind mehrere unterschiedlich dimensionierte Transportleitungen 7, 9, 11 und 13 angeordnet, geeignet für den Transport von fluiden Medien, wie beispielsweise Flüssigkeiten oder Gasen. Aufgrund der unterschiedlichen Temperaturen der in den vier Leitungen transportierten fluiden Medien sind die Leitungen im Querschnitt der Mehrfachleitung 1 asymmetrisch angeordnet. Vorzugsweise sind Leitungen, aufweisend ein Medium mit einer Temperatur mit einer grösseren Temperaturdifferenz zur Umgebung mehr im Zentrum der Mehrfachleitung angeordnet, so dass sich gegenüber der Aussenhaut 3 eine höhere Dämmstärke ergibt. Demgegenüber können Leitungen mit einer kleineren Temperaturdifferenz zur Umgebung nahe der Aussenhaut 3 angeordnet werden.

Schlussendlich ist in der Mehrfachleitung 1 eine elektrische Leitung 15 angeordnet, wobei selbstverständlich zusätzliche Leitungen angeordnet werden können. An der Aussenhaut 3 ist eine Öse 21 angeordnet, mittels welcher die Mehrfachleitung befestigt bzw. montiert werden kann.

Fig. 2 zeigt eine Verbindungsleitung 31 in der thermischen Solartechnik. Die heisse Vorlaufleitung 39 wird im Verhältnis zur kalten Rücklaufleitung 37 wesentlich stärker gedämmt. Zusätzlich wird der Wärmeaustausch zwischen den beiden Leitungen unterschiedlicher Temperatur minimiert. Die kalte Rücklaufleitung muss gegen Umgebungstemperatur nur minimal gedämmt werden. Die exakte Anordnung kann unter Berücksichtigung aller Randbedingungen optimiert werden. Im thermischen Solarsystem bezieht sich die Optimierung auf die Minimierung der konventionellen Nachheizenergie. Im Gegensatz zu den aus dem Stand der Technik bekannten Mehrfachleitungen kann mit der exzentrischen Anordnung der Leitungen 37 und 39 unter Berücksichtigung aller Randbedingungen auf der einen Seite Material eingespart werden und auf der anderen Seite die Leistungfähigkeit des Systems massiv gesteigert werden.

Ergänzend sei noch erwähnt, dass die Leitung 31 aus Fig. 2 wiederum eine Aussenhaut 33 aufweist, welche beispielsweise ein geflochtener Schutzmantel sein kann. Als Dämmaterial wird wiederum ein geschlossenzelliges, nicht polares Elastomer verwendet, und im Dämmaterial ist weiter ein Elektrokabel 45 angeordnet. Mit der Öse 51 an der Aussenhaut 33 ist wiederum die Montage der Solarverbindungsleitung 31 gewährleistet.

Bei den in den Fig. 1 und 2 dargestellten Beispielen handelt es sich selbstverständlich nur um Beispiele, welche zur besseren Erläuterung der vorliegenden Erfindung dienen. Grundsätzlich kann eine erfindungsgemässe Mehrfachleitung auf verschiedenste Art und Weise ausgebildet sein, wesentlich ist, dass die in der Mehrfachleitung angeordneten Leitungen für fluide Medien entsprechend der Temperatur der darin transportierten fluiden Medien asymmetrisch im Dämmaterial angeordnet sind.

## Patentansprüche

1. Mehrfachleitung, aufweisend mindestens zwei Transport- oder Kreislaufleitungen (7, 9, 11, 13, 37, 39) für fluide Medien, welche in wärmedämmendem Material (5, 35) eingebettet sind, dadurch gekennzeichnet, dass die Leitungen asymmetrisch in bezug auf den Querschnitt der Mehrfachleitung (1, 31) angeordnet sind und/oder dass die Dämmstärken des wärmedämmenden Materials der mindestens zwei Leitungen unterschiedlich sind.

2. Mehrfachleitung, insbesondere nach Anspruch 1, dadurch gekennzeichnet, dass die Leitungen (7, 9, 11, 13, 37, 39) in demselben Dämmaterial (5,35) integriert angeordnet sind.

3. Mehrfachleitung, insbesondere nach einem der Ansprüche 1 oder 2, dadurch gekennzeichnet, dass die Leitungen (7, 9, 11, 13, 37, 39) unterschiedliche Durchmesser aufweisen.

4. Mehrfachleitung, insbesondere nach einem der Ansprüche 1 bis 3, dadurch gekennzeichnet, dass die Leitungen unterschiedliche Wandstärken aufweisen.

5. Mehrfachleitung, insbesondere nach einem der Ansprüche 1 bis 4, dadurch gekennzeichnet, dass als Dämmaterial ein geschäumtes Polymer verwendet wird, wie vorzugsweise ein geschlossenzelliges, nicht polares Elastomermaterial, wie beispielsweise EPDM, Silikon oder ein verwandtes Material.

6. Mehrfachleitung, insbesondere nach einem der Ansprüche 1 bis 5, dadurch gekennzeichnet, dass eine oder mehrere weitere Leitungen, wie elektrische Kabel, Steuerkabel, Heizkabel etc., vorgesehen sind.

7. Mehrfachleitung, insbesondere nach einem der Ansprüche 1 bis 6, dadurch gekennzeichnet, dass eine mechanisch verstärkte Aussenhaut vorgesehen ist, beispielsweise aufweisend einen geflochtenen Schutzmantel oder ein gewelltes Edelstahlrohr, sowie gegebenenfalls Befestigungselemente, wie Befestigungsösen, zum Montieren oder Befestigen der Mehrfachleitung.

8. Verfahren zum Herstellen einer Mehrfachleitung nach einem der Ansprüche 1 bis 7, dadurch gekennzeichnet, dass zunächst der das Wärmedämmaterial aufweisende Mehrfachleitungskörper, beispielsweise mittels Extrusion, hergestellt wird und anschliessend die Transportleitungen für die fluiden Medien eingezogen, eingeblasen oder durch Aufschneiden der Wärmedämmung und Einlegen der Leitungen mit nachfolgendem Verschliessen, wie beispielsweise mittels Kleben, in das Wärmedämmaterial integriert werden zum Erzeugen der Mehrfachleitung.

9. Verfahren zum Herstellen einer Mehrfachleitung nach einem der Ansprüche 1 bis 7, dadurch gekennzeichnet, dass das Wärmedämmaterial zusammen mit den Leitungen für den Transport der fluiden Medien koextrudiert wird.

10. Verwendung der Mehrfachleitung nach einem der Ansprüche 1 bis 7 als Transport-, Kreislauf- oder Verbindungsleitung in der thermischen Solartechnik.
